Europäisches Patentamt

European Patent Office

Office européen des brevets

(11) Publication number: **0 507 390 A1**

# EUROPEAN PATENT APPLICATION

(21) Application number: **92200878.4**

(22) Date of filing: **27.03.92**

(51) Int. Cl.5: **A01D 43/00**

(30) Priority: **02.04.91 IT RE910024**

(43) Date of publication of application:
**07.10.92 Bulletin 92/41**

(84) Designated Contracting States:
**AT BE DE DK FR GB IT NL SE**

(71) Applicant: **SE.CO.MA. DI ANNA RISERVATO & C. - S.N.C.**
Via San Marco, 14
I-29100 Piacenza(IT)

(72) Inventor: **Codeluppi, Lelio**
Via S. Giustina, 17

I-42023 Cadelbosco Sopra (Reggio E.)(IT)
Inventor: **Santini, Daniela**
Via C. Colombo, 35
I-42023 Cadelbosco Sopra (Reggio E.)(IT)
Inventor: **Lucchini, Pierangelo**
Via Piave, 4
I-20070 Castelnuovo Bocca
d'Adda(Milano)(IT)

(74) Representative: **Corradini, Corrado et al**
Studio Ing. C. CORRADINI & C. S.r.l. 4, Via
Dante Alighieri
I-42100 Reggio Emilia(IT)

(54) **Improved machine for dewatering mown forage in the field.**

(57) A machine for dewatering mown forage in the field, comprising at least one pair of perforated presser rollers 14, from the perforations 15 of which there flows ventilation air drawn from a central tunnel 11 with a variable air intake 12 by at least one fan driven by an auxiliary motor, the heat of operation of which is transferred together with that of the machine drive motor, for heating said air in the central tunnel in cooperation with other possible heat sources installed in the tunnel, and at least three conveyor belts 21, 22, 23 arranged one below the other but offset in the axial direction, they being blasted from the bottom upwards by ventilation air drawn from said tunnel and blown by fans through slots inclined in the direction of movement of the belts.

Fig.1

This invention relates to a new self-propelled or towed machine for dewatering mown forage in the field, which provides a path for the forage which is comparatively very long compared with the length of the machine, with consequently a considerable time available for dewatering, which is achieved by forced ventilation of the forage.

This enables effective and perfect dewatering of the mown forage in the field, whatever the environmental conditions, with minimum operating costs and ensured constant quality of the treated product.

Self-propelled or towed mowing machines which dewater the forage in the field are already known in the state of the art, but in all these machines the dewatering merely involves squeezing the cut forage by passing it between two presser rollers.

It is apparent that such an operation can give satisfactory results only under specifically hot and dry environmental conditions, whereas under all other conditions it is always necessary to evaporate the forage moisture by leaving it exposed to the air for the required time, which can be as much as several days, this obviously not being the optimum solution especially during winter or during particularly humid periods.

An object of the present invention is to obviate the aforesaid drawback by providing a machine for dewatering mown forage which is able to provide at its exit a perfectly dewatered product already for baling, and of constantly excellent quality independent of environmental conditions.

A further object of the invention is to provide a manageable machine which is simple to use.

This is substantially attained in that the forage cut by the cutter bar then squeezed by a pair of presser rollers and conveyed into the machine is made therein to pass between at least one pair of perforated presser rollers internally fed, via a header, with pressurized air originating within a central tunnel of variable air intake, by at least one fan driven by an auxiliary motor carried by the machine.

The heat produced by the auxiliary motor together with that produced by the machine drive motor, generally situated in the front part of the machine, is transferred to heat said air in the central tunnel.

In this manner the passage of air from the perforations of said perforated presser rollers results in an initial and most effective dewatering of the squeezed forage.

According to the invention the forage leaving said rollers is fed along at least three conveyor belts arranged one below the other and offset in an axial direction to enable the forage to undergo its return travel, said belts travelling above corresponding air distribution chambers which are provided with slots inclined in the direction of movement of the belts and extending preferably along the entire width of said belts.

The slots of each chamber are fed from the bottom upwards with the air originating from said central tunnel via a header, by means of at least one fan driven by said auxiliary motor.

There is thus the double advantage of a long travel path for the forage subjected to the treatment and hence a long period available for dewatering the forage from below, without this substantially influencing the length of the machine, together with the fact that the forage is maintained in suspension by the ventilation of the forage from the bottom upwards, hence easily achieving uniform traversing of the forage by the air, increased forage aeration and easier expulsion of the exit moist air, leading in short to effective forage dewatering.

The air from said variable air intake tunnel can be heated not only by the heat produced by the operation of said auxiliary and drive motors but also additionally by other heat sources situated within the tunnel, such as an electric heater, hot air generator etc., with automatic operation as necessary to remove the moisture from the forage. In other words, the air quantity and its extent of heating are controlled on the basis of the exit moisture content of the forage, ie the tunnel variable air intake, the operation and speed of the fans and the switching of said other heat sources are controlled automatically by a moisture sensor situated at the machine exit.

In this manner, not only can any requirement be satisfied as ventilation air is available at any temperature, but in addition the self-regulation enables the quality of the treated product to be maintained always constant without wastage, and hence at minimum operating cost.

The machine for dewatering mown forage in the field, comprising a unit consisting of a cutter bar and a pair of presser rollers and hinged to a four-wheeled self-propelled structure driven by a drive motor situated for example in the front part of the structure, and a conveyor belt for conveying the mown and pressed forage onto said structure, is characterised by comprising, along the forage travel path in succession on said structure, at least one pair of perforated presser rollers fed with pressurized air originating within a central tunnel of variable air intake, by at least one fan driven by an auxiliary motor, the operating heat of which, together with that produced by the drive motor, is transferred to heat said air in the central tunnel, and at least three conveyor belts arranged one below the other but axially offset, said belts travelling above corresponding air distribution chambers the upper walls of which are provided with slots inclined in the direction of movement of the belts and extending along the entire width of said belts, the slots of each chamber being fed from the bottom upwards with the air originating from the central tunnel, means also being provided for automatically controlling said air and for making the machine manageable and easy to use.

According to a preferred embodiment of the present invention, the slots in the upper walls of said air distribution chambers are each formed from a series of dihedral plates arranged in succession and fixed at their ends to said self-propelled structure, their oblique side forming said inclined slot.

The invention is described in detail hereinafter with reference to the accompanying drawings which show a preferred embodiment thereof by way of non-limiting example and in which:

Figure 1 is a partly sectional perspective view of the invention with the cover slightly raised to show the underlying frame;

Figure 2 is a partial perspective view of the invention interior, consisting of said underlying frame.

In the figures the reference numeral 1 indicates the cutter bar and 2 the pair of presser rollers, these forming a unit hinged to the frame of the self-propelled structure 4 which runs on front wheels 5 and rear wheels 6. The bar 1 and the rollers 2 are maintained in their operating position or raised for transportation by pairs of pneumatic cylinders 7 (of which only one is shown) positioned between said frame 3 and said unit formed by said cutter bar 1 and rollers 2.

The self-propelled structure 4 is controlled from the drive cab 8 and is driven by a drive motor enclosed within a front cowling 9 provided with cooling air intakes 10 and arranged to transfer the operating heat of the motor in order to heat the air in a central tunnel 11 closed at its end by a hinged door 12 of adjustable opening.

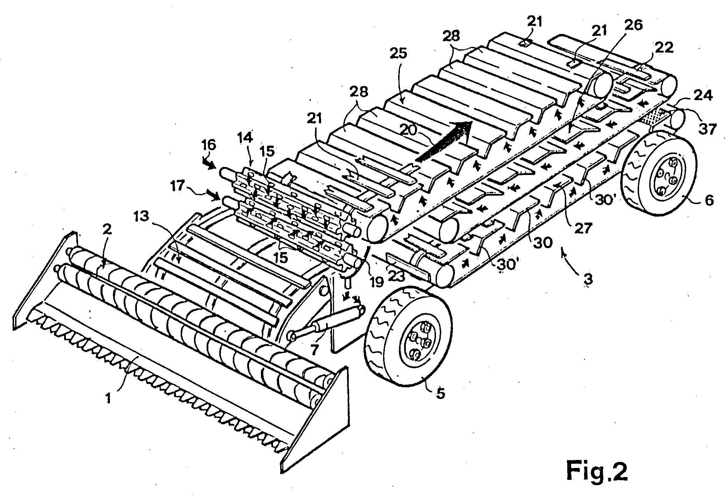

The forage mown by the bar 1 and pressed by the rollers 2 is conveyed by a conveyor belt 13 onto the frame 3 where it passes between at least one pair of perforated presser rollers 14 (Figure 2), from the perforations 15 of which there flows ventilation air which is withdrawn from the central tunnel 11 and forced by at least one fan (not shown in the figure) into the feed headers 16 and 17 respectively, from which it is fed into the interior of said rollers 14. Said fan is driven by an auxiliary motor enclosed within a rear cowling 18, also provided with cooling air intakes for the motor, which heats said air in the central tunnel 11. Because of the considerable dewatering which occurs, a water discharge conveyor 19 is provided below the perforated rollers 14.

The forage is received downstream of the perforated rollers 14 and conveyed in the direction of the arrow 20 by the first of three conveyor belts, 21, 22 and 23 respectively, arranged one below the other and mutually offset longitudinally so that they project beyond the end of the overlying belt in the direction of movement of this latter. The intermediate belt rotates in the opposite direction to the other two. In this manner the forage travels in three planes in that at the end of the first belt 21 the forage is transferred to the underlying belt 22 which in its turn transfers it to the belt 23 which carries it to the machine exit 24.

Said conveyor belts 21, 22, 23 travel above corresponding chambers 25, 26 and 27 respectively, the upper surfaces of which are formed from a succession of dihedral plates 28 arranged side-by-side and fixed at their ends to the self-propelled frame 3. The oblique side 28' of the dihedrals forms the slots, inclined in the direction of movement of the overlying conveyor belts and extending along the entire width of said belts.

The slots 28' of each chamber 25, 26 and 27 are fed from the bottom upwards with the air originating from the central tunnel 11 via respectively the headers 31, 32 and 33 and the relative fans 34, 35, 36 driven by said auxiliary motor contained in 18.

A moisture sensor 37 is provided at the machine exit 24 to automatically control both the fan and the heat for air heating, which heat can be increased by other heat sources inserted into said central tunnel 11 via the flanges 38 and 39.

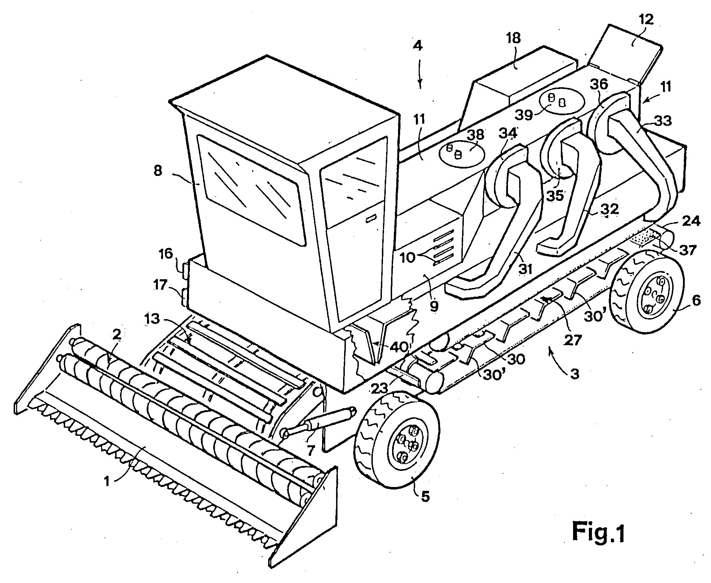

Figure 1 also shows a branch 40 to enable the forced air from the header 31 to be also fed to the perforated presser rollers.

## Claims

1. A machine for dewatering mown forage in the field, of the type comprising a cutter bar and a pair of presser rollers 2 hinged to a four-wheeled self-propelled structure 4 driven by a drive motor, and a conveyor belt 13 for conveying the mown and pressed forage onto said structure, characterised by comprising, along the forage travel path in succession on said structure, at least one pair of perforated presser rollers 14 internally fed via a header 40 with pressurized air originating within a central tunnel 11 of variable air intake 12, by at least one fan driven by an auxiliary motor, the operating heat of which, together with that produced by the drive motor, is transferred to heat said air in the central tunnel 11, and at least three conveyor belts 21, 22, 23 arranged in succession one below the other but offset in the longitudinal direction, said belts travelling above corresponding chambers 25, 26, 27 the upper wall of which is provided with slots, the slots of each chamber being fed from the bottom upwards with said air originating from the central tunnel 11 via headers 31, 33, 33 and relative fans 34, 35, 36, means also being provided for automatically controlling the flow rate and temperature of said air.

2. A machine as claimed in claim 1, characterised in that said means for automatically controlling the temperature and flow rate of the air from the central tunnel comprise heat sources 38, 39 situated within said tunnel and operated automatically, together with a moisture sensor 37 situated at the machine exit for regulating said variable air intake 12 of the tunnel 11 and for regulating the speed of said fans 34, 35 and 36.

3. A machine as claimed in claim 1, characterised in that the upper wall of said chambers is formed from a succession of dihedral plates 28 arranged side-by-side and fixed at their ends to said self-propelled structure, their oblique sides forming slots inclined in the direction of movement of the overlying conveyor belts.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 527 031 (WINGER)<br>* the whole document *<br>--- | 1-3 | A01D43/00 |
| Y | FR-A-2 019 517 (TEXAS INDUSTRIES)<br>* page 3, line 5 - line 13 *<br>* page 5, line 36 - line 38 *<br>--- | 1-3 | |
| Y | WO-A-9 101 080 (FINGERSON)<br>* page 13, line 4 - line 14 *<br>* page 13, line 26 - page 14, line 7 *<br>* page 17, line 11 - page 18, line 6 *<br>* page 21, line 15 - page 24, line 28 *<br>--- | 1-3 | |
| A | FR-A-2 633 146 (CARRERAS)<br>--- | | |
| A | FR-A-2 031 095 (PIOVANO)<br><br>----- | | |
| | | | TECHNICAL FIELDS SEARCHED (Int. Cl.5)<br><br>A01D |

The present search report has been drawn up for all claims

| Place of search | Date of completion of the search | Examiner |
|---|---|---|
| THE HAGUE | 12 JUNE 1992 | DE LAMEILLIEURE D. |

EPO FORM 1503 03.82 (P0401)